# DEMANDE DE BREVET EUROPEEN

(11) **EP 1 986 309 A1**
(43) Date de publication de la demande: **29.10.2008**
(21) Numéro de dépôt: 08155027.9
(22) Date de dépôt: 23.04.2008
(51) Int. Cl.: H02K 16/00, H02K 15/16, H02K 1/18

(54) **Machine électrique tournante comportant deux parties statoriques et deux parties rotoriques**

(30) Priorité: 27.04.2007 FR 0754762
(71) Demandeur: Moteurs Leroy Somer, 16000 Angouleme (FR)
(72) Inventeur: Makki, Ali, 69006 LYON (FR)
(74) Mandataire: Tanty, François

(57) **Abrégé**

La présente invention concerne une machine électrique tournante polyphasée (1), comportant au moins deux parties rotoriques (4,5) solidaires et rotatives autour d'un même axe de rotation (X) et au moins deux parties statoriques (2,3) solidaires, chaque partie statorique (2,3) interagissant avec une partie rotorique (4,5) respective,
les deux parties rotoriques (4,5) et/ou les deux parties statoriques (2,3) étant réunies par une liaison mécanique (7) permettant, dans une configuration de réglage de la machine, une rotation relative de l'une (2,4) par rapport à l'autre (3,5) autour de l'axe de rotation (X) et, dans une configuration d'utilisation de la machine, leur immobilisation, la machine étant une machine à entrefer radiale et les parties rotoriques (4,5) comportant des aimants permanents (10).

## Description

La présente invention a pour objet les machines électriques tournantes polyphasées comportant au moins deux parties rotoriques et statoriques.

Il est connu, pour augmenter la puissance électrique d'une machine électrique, d'assembler deux parties statoriques et rotoriques et de les alimenter avec deux variateurs de fréquence pilotés par un circuit de contrôle commun relativement complexe.

Il existe un besoin pour faciliter le contrôle des machines électriques tournantes à plusieurs parties rotoriques et statoriques.

L'invention vise à répondre ce besoin.

Selon l'un de ses aspects, l'invention a pour objet une machine électrique tournante polyphasée comportant au moins deux parties rotoriques solidaires et rotatives autour d'un même axe de rotation et au moins deux parties statoriques solidaires, chaque partie statorique interagissant avec une partie rotorique respective,
les deux parties rotoriques et/ou les deux parties statoriques étant réunies par une liaison mécanique permettant, dans une configuration de réglage de la machine, une rotation relative de l'une par rapport à l'autre autour de l'axe de rotation et, dans une configuration d'utilisation de la machine, leur immobilisation.

Chaque partie statorique peut n'interagir qu'avec une partie rotorique correspondante.

L'invention permet d'alimenter les parties statoriques et/ou rotoriques avec un même variateur de fréquence, en offrant une possibilité d'alignement magnétique des parties statoriques et/ou rotoriques.

On désigne par « alignement magnétique » l'alignement des axes magnétiques des phases correspondantes des parties statoriques et/ou rotoriques et par « phases correspondantes » les phases de parties statoriques et rotoriques connectées à une même phase de l'alimentation.

La liaison mécanique ci-dessus permet de disposer d'un réglage relativement précis des positions angulaires des axes magnétiques des parties statoriques et/ou rotoriques et d'aligner les champs magnétiques correspondants.

Dans un exemple de réalisation, la liaison mécanique comporte au moins une vis permettant, avant son serrage, la rotation relative de l'une des parties par rapport à l'autre, et après le serrage de la vis, l'immobilisation des parties.

Les parties de la machine réunies par la liaison mécanique peuvent être les parties statoriques ou les parties rotoriques. Des liaisons mécaniques peuvent encore être prévues à la fois pour les parties statoriques et les parties rotoriques.

Les parties rotoriques peuvent être alignées magnétiquement avant l'assemblage de la machine.

En variante, les parties rotoriques peuvent ne pas être alignées magnétiquement avant l'assemblage de la machine, chaque partie statorique qui interagit avec une partie rotorique étant alors alignée avec cette partie rotorique au moyen de la liaison mécanique.

Selon un exemple de réalisation, au moins une partie statorique comporte un carter comportant une bride d'accouplement solidaire du carter et la liaison mécanique comporte au moins une lumière oblongue réalisée dans la bride d'accouplement. Cette dernière peut comporter par exemple au moins trois lumières réniformes, réparties angulairement sur la bride. L'une des parties statoriques peut comporter un carter comportant une bride d'accouplement comportant un taraudage dans lequel la vis précitée peut être vissée.

Dans un autre exemple de réalisation, chaque partie statorique comporte un carter et la liaison mécanique comporte une pièce d'accouplement venant en recouvrement avec l'un des carters au moins. La pièce d'accouplement peut comporter au moins une gorge annulaire et le carter avec lequel la pièce d'accouplement vient en recouvrement peut porter au moins une vis s'engageant dans cette gorge.

Lorsque la pièce d'accouplement comporte deux gorges annulaires venant respectivement en recouvrement avec les deux carters, chacune de ces gorges peut recevoir une vis portée par un carter correspondant.

En variante, les carters peuvent être fixés à la pièce d'accouplement par d'autres moyens de fixation, par exemple par collage, sertissage, rivetage ou soudage.

La pièce d'accouplement peut comporter une nervure contre laquelle les carters viennent axialement en appui. Cette nervure peut se situer entre les gorges précitées.

La machine peut comporter une chemise tubulaire monobloc, à l'intérieur de laquelle sont emmanchées les parties statoriques. Dans un exemple de réalisation, la reprise de couple entre les deux parties statoriques est assurée par la liaison mécanique et la chemise. Dans un autre exemple de réalisation, la reprise de couple entre les deux parties statoriques est entièrement assurée par la liaison mécanique.

La rotation relative d'une partie statorique par rapport à l'autre, dans la configuration de réglage de la machine, peut s'effectuer par exemple sur au moins +/- 30° mécaniques, ce qui peut permettre de remédier au décalage angulaire dû par exemple à l'imprécision de l'insertion des parties statoriques dans la carcasse de la machine.

Les phases correspondantes des deux parties statoriques peuvent présenter des axes magnétiques décalés angulairement de moins de +/- 30° mécaniques dans la configuration d'utilisation de la machine.

Dans un exemple de mise en oeuvre de l'invention, les deux parties rotoriques ont un arbre commun. En variante, les deux parties rotoriques ont chacune un arbre et ces arbres sont assemblés le long de l'axe de rotation de la machine, éventuellement par une liaison mécanique telle que définie ci-dessus.

Les deux parties rotoriques peuvent être positionnées à l'intérieur des parties statoriques. En variante, une partie rotorique peut être positionnée à l'extérieur des parties statoriques, l'autre partie rotorique étant disposée à l'intérieur des parties statoriques.

La machine électrique peut être une machine radiale ou discoïde.

Les parties statoriques peuvent être à bobinage concentré ou distribué.

Les parties rotoriques peuvent comporter des aimants permanents, par exemple des aimants surfaciques ou enterrés. Les parties rotoriques peuvent être à concentration de flux.

Dans un autre exemple de mise en oeuvre de l'invention, les parties rotoriques sont bobinées.

Les phases correspondantes des deux parties statoriques peuvent être alimentées en série ou en parallèle dans la configuration d'utilisation de la machine.

La machine électrique peut être réversible, c'est-à-dire qu'elle peut fonctionner selon l'usage comme moteur ou comme générateur, notamment comme alternateur.

L'invention a encore pour objet, selon un autre de ses aspects, une installation de réglage du décalage angulaire entre les axes magnétiques de deux parties rotoriques et/ou deux parties statoriques d'une machine électrique telle que définie précédemment, cette installation comportant :
- un dispositif d'alimentation en courant continu des phases des parties rotoriques et/ou des parties statoriques de la machine, et/ou
- un indicateur de synchronisation relié à chaque phase des parties rotoriques et/ou statoriques.

L'invention a encore pour objet, selon un autre de ses aspects, une installation électrique comportant :
- une machine électrique tournante telle que définie précédemment, et
- un unique variateur de fréquence relié aux parties statoriques ainsi éventuellement qu'aux parties rotoriques.

L'invention a encore pour objet, selon un autre de ses aspects, un procédé d'assemblage d'une machine électrique tournante polyphasée, comportant au moins deux parties rotoriques solidaires et rotatives autour d'un même axe de rotation et au moins deux parties statoriques solidaires, chaque partie statorique interagissant avec une partie rotorique respective,
les deux parties statoriques étant réunies par une liaison mécanique permettant, dans une configuration de réglage de la machine, une rotation relative de l'une par rapport à l'autre autour de l'axe de rotation et, dans une configuration d'utilisation de la machine, leur immobilisation,
procédé dans lequel, dans la configuration de réglage :
- on positionne les parties rotoriques vis-à-vis des parties statoriques,
- on aligne magnétiquement les parties statoriques
   - - en alimentant ces parties statoriques en courant continu de manière à générer un champ magnétique permettant une rotation relative des parties statoriques pour aligner les axes magnétiques des phases correspondantes des parties statoriques, ou en mettant en rotation les parties rotoriques de manière à induire des tensions dans les phases des parties statoriques, et en comparant les tensions induites, notamment la phase des tensions induites, par exemple grâce à l'indicateur de synchronisation précité, eton immobilise les parties statoriques ainsi alignées magnétiquement de manière à obtenir la configuration d'utilisation de la machine.

Selon un autre de ses aspects, l'invention a encore pour objet un procédé d'assemblage d'une machine électrique tournante polyphasée, comportant au moins deux parties rotoriques solidaires et rotatives autour d'un même axe de rotation et au moins deux parties statoriques solidaires, chaque partie statorique interagissant avec une partie rotorique respective, les deux parties rotoriques étant réunies par une liaison mécanique permettant, dans une configuration de réglage de la machine, une rotation relative de l'une par rapport à l'autre autour de l'axe de rotation et, dans une configuration d'utilisation de la machine, leur immobilisation,
procédé dans lequel, dans la configuration de réglage,
- on aligne magnétiquement les parties rotoriques en les alimentant en courant continu de manière à générer un champ magnétique permettant une rotation relative des parties rotoriques pour aligner les axes magnétiques des phases correspondantes des parties rotoriques, et
- on immobilise les parties rotoriques alignées magnétiquement de manière à obtenir la configuration d'utilisation de la machine.

La valeur du courant continu dans les procédés ci-dessus peut être comprise par exemple entre Iₙ et 1,5 Iₙ, Iₙ désignant la valeur du courant nominal de la machine électrique.

Les phases correspondantes des deux parties statoriques et/ou rotoriques peuvent être connectées en série dans la configuration de réglage de la machine. En variante, les phases correspondantes des deux parties peuvent être connectées en parallèle.

Que la machine soit radiale ou discoïde, les parties statoriques peuvent être reliées entre elles par une liaison mécanique qui permet le réglage ci-dessus et qui permet également, lors du fonctionnement de la machine, de déplacer angulairement l'une des parties statoriques par rapport à l'autre; par exemple, la liaison mécanique comporte un motoréducteur permettant d'entraîner en rotation l'une des parties statoriques par rapport à l'autre. Ce motoréducteur peut être commandé de façon à réduire le flux magnétique dans les bobines de l'une des parties statoriques, afin d'augmenter la vitesse de rotation maximale. Cela peut permettre par exemple de doubler ou tripler la vitesse de la machine sans modifier son bobinage ou sa tension d'alimentation, grâce au défluxage du moteur ainsi réalisé.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 est une vue schématique en élévation d'un exemple de machine réalisée conformément à l'invention,
- la figure 2 est une coupe longitudinale selon II-II de la figure 1,
- les figures 3 à 6 illustrent schématiquement des étapes d'un exemple de procédé d'alignement magnétique de deux parties d'une machine selon l'invention,
- les figures 7 à 9 représentent schématiquement un autre exemple de liaison mécanique,
- les figures 10 et 11 représentent schématiquement d'autres exemples de machines selon l'invention, et
- la figure 12 est une coupe longitudinale, schématique, d'une variante de réalisation.

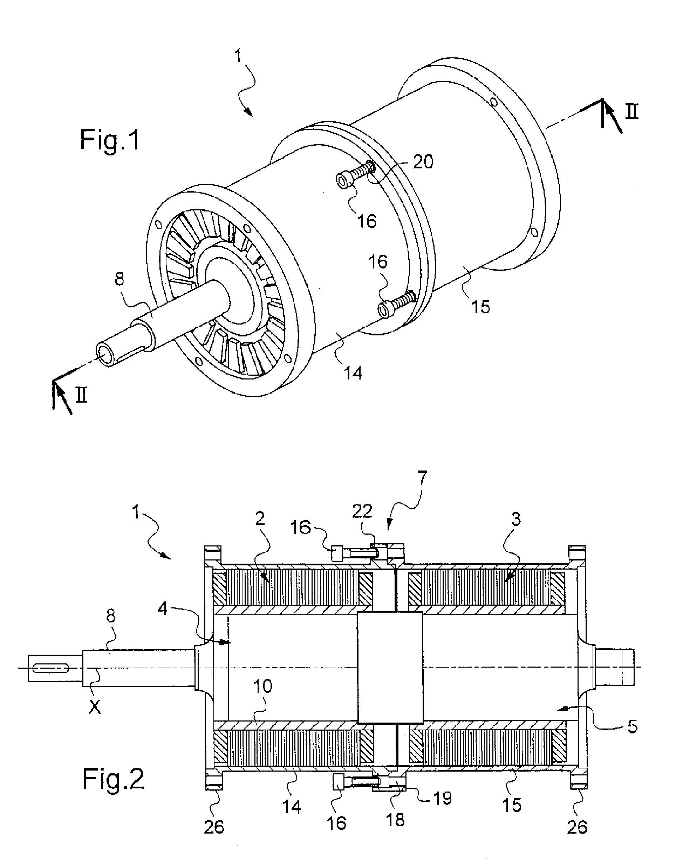

La machine 1 représentée sur les figures 1 et 2 comporte des première 2 et deuxième 3 parties statoriques réunies par une liaison mécanique 7, et des première 4 et deuxième 5 parties rotoriques respectivement associées aux première et deuxième parties statoriques.

Les parties rotoriques 4 et 5 sont solidaires d'un même arbre 8 qui tourne autour d'un axe de rotation X, par exemple pour entraîner une charge dans le cas où la machine est motrice ou être entraînée dans le cas où la machine est génératrice.

Chaque partie rotorique comporte par exemple des aimants permanents 10 qui peuvent être des aimants disposés en surface ou enterrés, chaque partie rotorique étant par exemple à concentration de flux.

Les aimants permanents 10 peuvent avoir une forme annulaire, cylindrique ou de segment.

Chaque partie statorique 2 ou 3 peut être à bobinage distribué ou concentré, étant par exemple à bobinage concentré, les dents pouvant comporter ou non des épanouissements polaires.

Dans l'exemple considéré, les parties rotoriques 4 et 5 sont de même polarité, de même que les parties statoriques 2 et 3.

Dans l'exemple considéré, les parties rotoriques 4 et 5 sont positionnées à l'intérieur des parties statoriques 2 et 3.

Les parties rotoriques peuvent être de construction identique, étant par exemple réalisées à partir de tôles découpées identiquement. Il peut en être de même pour les parties statoriques.

La partie statorique 2 comporte un carter extérieur 14 et la partie statorique 3 comporte un carter extérieur 15, les carters étant pourvus de moyens d'accouplement permettant de les assembler avec une orientation réglable de l'un par rapport à l'autre.

Dans l'exemple considéré, ces moyens d'accouplements comportent comme on peut le voir sur la figure 1 des vis 16 agencées pour se visser dans des taraudages 18 d'une bride 19 du carter 15, les vis 16 étant engagées au travers de lumières oblongues 20 d'une bride 22 du carter 14.

La longueur des lumières 20 limite le débattement angulaire d'un carter relativement à l'autre.

Chaque carter peut comporter du côté opposé aux brides 19 et 22 des attaches 26 permettant la fixation sur un bâti de la machine 1, voire l'assemblage de plus de deux parties statoriques entre elles, alignées selon l'axe de rotation X.

Dans l'exemple de la figure 2, les carters 14 et 15 s'emboîtent à leurs extrémités pour assurer un certain guidage en rotation de l'un des carters par rapport à l'autre avant serrage des vis.

Les vis 16 peuvent n'être serrées qu'après alignement magnétique des parties statoriques, comme cela sera décrit plus loin.

Une fois les vis 16 serrées, les carters 14 et 15 sont dans une configuration d'utilisation, sans mouvement relatif en rotation de l'un par rapport à l'autre, le serrage des vis 16 assurant la reprise du couple ou, en variante, les carters étant fixés autrement après serrage des vis de manière à assurer la reprise du couple.

Les moyens de fixation entre les carters peuvent être réalisés autrement, sans que l'on sorte du cadre de la présente invention.

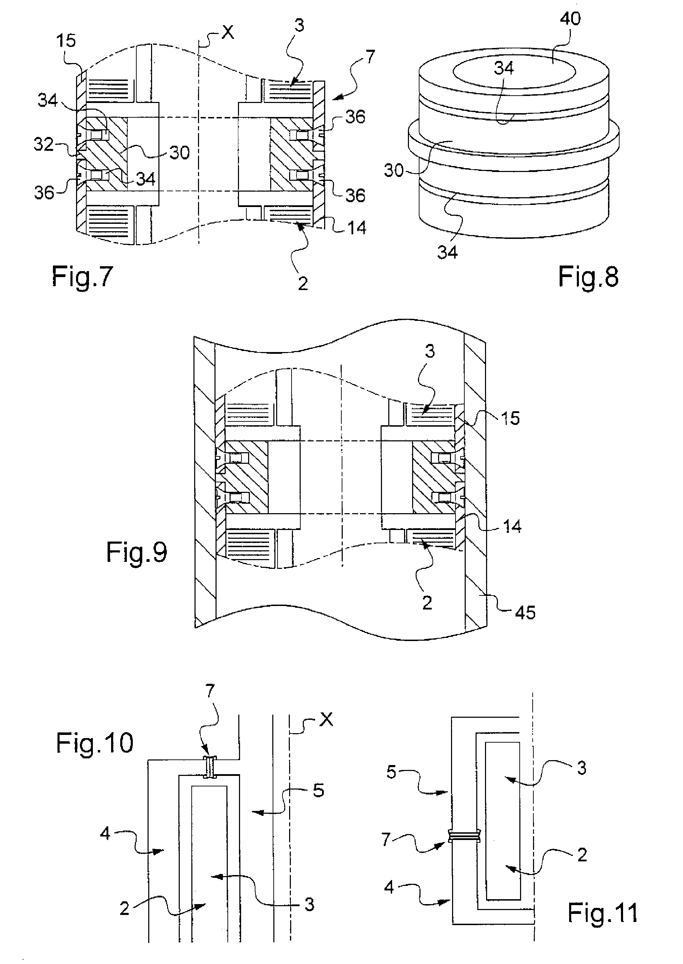

Les figures 7 à 9 représentent un autre exemple de réalisation de la liaison mécanique 7, dans lequel une pièce d'accouplement 30 est emmanchée dans les carters 14 et 15 et permet une rotation de l'un par rapport à l'autre autour de l'axe X.

La pièce d'accouplement 30 comporte une nervure 32 contre laquelle les carters 14 et 15 peuvent venir en appui axialement.

La pièce d'accouplement 30 comporte également deux gorges annulaires 34 dans lesquelles peuvent se visser des vis de serrage 36 qui viennent en prise sur les carters 14 et 15 pour immobiliser les carters l'un relativement à l'autre.

La pièce d'accouplement 30 est traversée centralement par un alésage 40 qui permet le passage de l'arbre.

Le cas échéant, comme représenté à la figure 9, les deux carters peuvent être introduits dans une chemise 45 qui peut participer à la reprise du couple, voire assurer presque entièrement cette reprise de couple.

Conformément à l'invention, dans une première étape d'un procédé d'assemblage de la machine, les moyens de fixation des carters sont dans une configuration de réglage de la machine permettant une rotation des parties statoriques l'une relativement à l'autre autour de l'axe de rotation.

Dans une deuxième étape, une fois l'alignement magnétique effectué, les moyens de fixation passent dans une configuration d'utilisation de la machine dans laquelle les parties statoriques sont immobilisées.

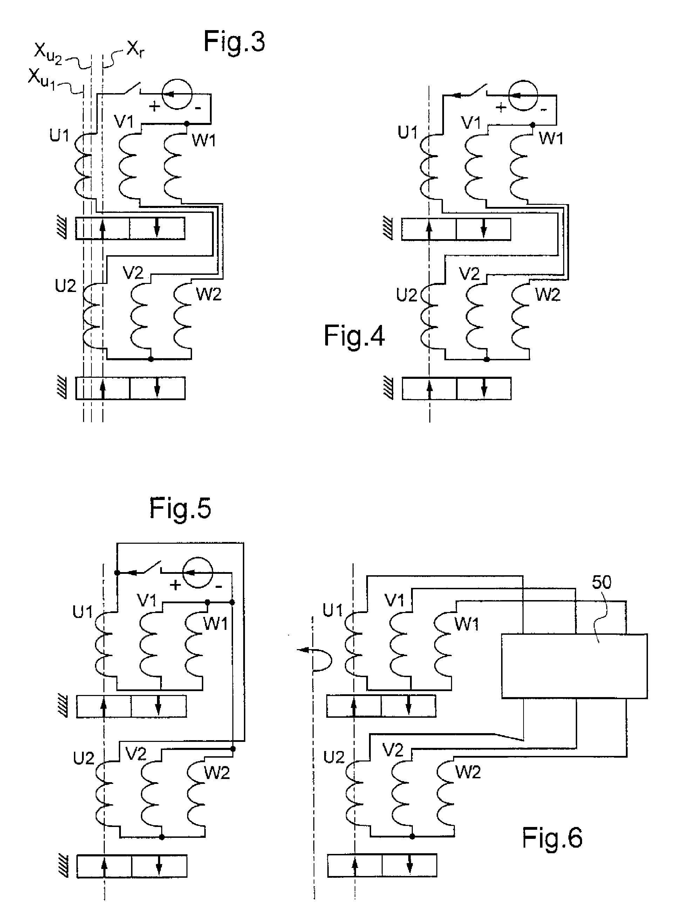

On va décrire aux figures 3 à 6 plusieurs voies pour procéder à l'alignement magnétique des parties statoriques d'une machine triphasée.

Sur la figure 3, U1, V1 et W1 correspondent aux phases de la première partie statorique et U2, V2 et W2 à celles de la deuxième partie statorique.

X_{U1} désigne l'axe magnétique de la phase U1, X_{U2} celui de la phase U2 et X_{R} celui d'un pôle du rotor.

Pour procéder à l'alignement, les deux parties rotoriques 4 et 5 sont rigidement couplées et immobilisées. L'une au moins des parties statoriques peut tourner par rapport à l'autre et par rapport aux parties rotoriques, comme représenté à la figure 3. Les enroulements des phases U1, V1 et W1 sont par exemple reliés électriquement en série avec ceux des phases U2, V2 et W2. Les enroulements sont alimentés ensuite électriquement en courant continu, comme illustré à la figure 4, ce qui a pour effet d'aligner les axes magnétiques X_{U1} et X_{U2} relativement à l'axe X_{R} d'un pôle magnétique du rotor. Une fois cet alignement effectué, les moyens de fixation peuvent être amenés dans la configuration d'utilisation de la machine dans laquelle les parties statoriques sont immobilisées entre elles.

Dans la variante illustrée à la figure 5, les enroulements des phases U1, V1 et W1 sont reliés électriquement selon une configuration étoile, en parallèle avec les enroulements U2, V2, W2. On procède de la même façon pour aligner les parties statoriques représentées à la figure 5 que pour celles représentées aux figures 3 et 4.

Dans la variante illustrée à la figure 6, les parties rotoriques 4 et 5 sont entraînées en rotation. Les enroulements des deux parties statoriques 2 et 3 sont reliés à un indicateur de synchronisation 50 qui permet de fournir une information sur le déphasage entre les tensions induites dans les phases des parties statoriques. En fonction de cette information, on agit sur le positionnement angulaire relatif de l'une des parties statoriques par rapport à l'autre de manière à annuler ce déphasage. Une fois le déphasage annulé, les moyens de fixation peuvent être amenés dans la configuration d'utilisation de la machine dans laquelle les parties statoriques sont immobilisées.

Le déplacement d'une partie statorique relativement à l'autre peut s'effectuer manuellement, par exemple grâce à un opérateur qui lit sur l'indicateur de synchronisation la valeur du déphasage. En variante, ce déplacement peut s'effectuer de manière automatisée.

L'invention n'est pas limitée à deux parties statoriques pouvant être alignées magnétiquement grâce à des moyens de fixation pouvant passer d'une configuration de réglage de la machine à une configuration d'utilisation de la machine.

Ainsi, on a illustré sur les figures 10 et 11 la possibilité d'avoir par exemple deux parties rotoriques pouvant être reliées grâce à de tels moyens de fixation.

Dans l'exemple de la figure 10, les deux parties rotoriques 4 et 5 sont concentriques, constituant respectivement des rotors externe et interne situés de par et d'autre des parties statoriques 2 et 3.

Dans l'exemple de la figure 11, les parties rotoriques 4 et 5 sont des rotors externes disposés bout à bout.

L'invention n'est pas limitée aux exemples de réalisation qui viennent d'être décrits.

On peut utiliser d'autres moyens de fixation, lesquels peuvent être réalisés autrement, et l'assemblage peut s'effectuer par exemple par soudure ou collage, après un pré-assemblage au moyen par exemple de vis.

Une fois l'alignement magnétique effectué, une machine selon l'invention peut avantageusement être utilisée avec un unique variateur électronique ayant un unique pont de puissance.

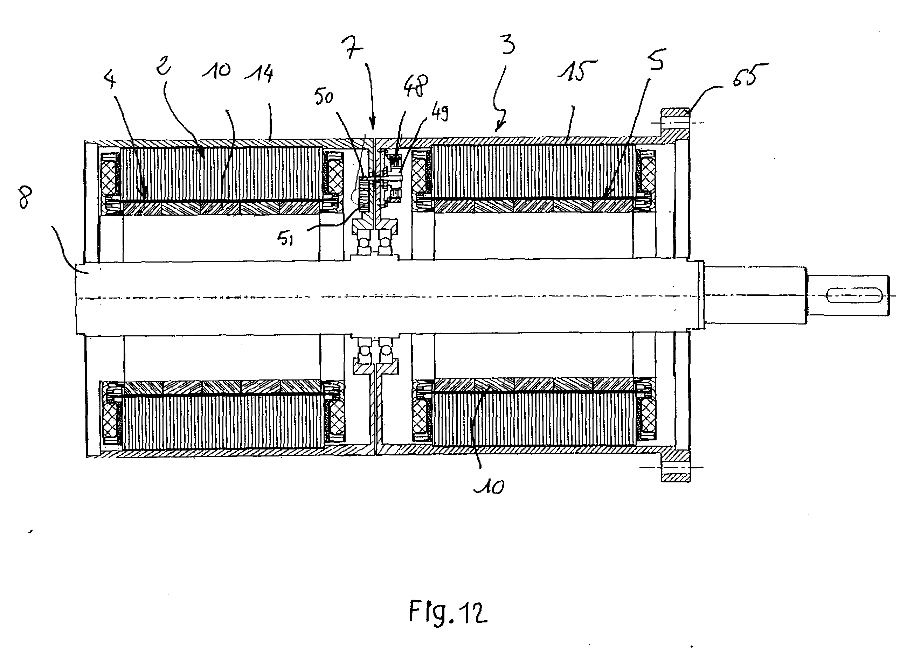

Dans la variante illustrée à la figure 12, les deux parties statoriques sont reliées par une liaison 7 qui permet de les déplacer l'une par rapport à l'autre lors du réglage initial et/ou au cours du fonctionnement de la machine.

La partie statorique fixe 3 comporte par exemple une bride de fixation 65 du côté opposé à l'autre partie statorique 2, qui est mobile.

La liaison 7 comporte par exemple un motoréducteur 48 qui peut être formé d'un moteur plat 49 fixé sur l'une des parties statoriques, de préférence celle qui est fixé, pour entraîner une vis sans fin 50 coopérant avec une denture 51 portée par l'autre partie statorique 2.

Le profil du ou des engrenages du motoréducteur 48 est tel que lorsque le motoréducteur est à l'arrêt, les deux parties statoriques ne peuvent pas tourner l'une par rapport à l'autre, cette rotation relative n'étant possible que lors de la mise en marche du motoréducteur. Le motoréducteur 48 assure ainsi la transmission du couple entre les parties statoriques 2 et 3.

Le motoréducteur peut être commandé, lors du fonctionnement de la machine, dans le sens de rotation voulu et sur la course angulaire qui est adaptée à défluxer la machine.

Par exemple, lorsque la vitesse demandée à la machine qui fonctionne en moteur dépasse la vitesse maximale admissible du moteur avec les deux parties statoriques, dans leur configuration initiale, la position de la partie statorique mobile 2 est changée, ce qui réduit la quantité de flux magnétique dans les bobines correspondantes. La force électromotrice induite baisse et cela permet l'augmentation de la vitesse maximale du moteur.

Dans une variante non illustrée, le motoréducteur est disposé à l'extérieur des parties statoriques.

L'expression « comportant un » doit être comprise comme étant synonyme de « comportant au moins un », sauf si le contraire est spécifié.

## Revendications

1. Machine électrique tournante polyphasée (1), comportant au moins deux parties rotoriques (4, 5) solidaires et rotatives autour d'un même axe de rotation et au moins deux parties statoriques (2, 3) solidaires, chaque partie statorique (2, 3) interagissant avec une partie rotorique (4, 5) respective,
les deux parties rotoriques (4, 5) et/ou les deux parties statoriques (2, 3) étant réunies par une liaison mécanique (7) permettant, dans une configuration de réglage de la machine, une rotation relative de l'une par rapport à l'autre autour de l'axe de rotation et, dans une configuration d'utilisation de la machine, leur immobilisation, la machine étant une machine radiale et les parties rotoriques (4, 5) comportant des aimants permanents (10).

2. Machine selon la revendication 1, la liaison mécanique (7) comportant au moins une vis (16) permettant, avant son serrage, la rotation relative de l'une des parties par rapport à l'autre, et après le serrage de la vis, l'immobilisation des parties.

3. Machine selon l'une des deux revendications précédentes, les deux parties statoriques (2, 3) étant réunies par une liaison mécanique (7) permettant, dans la configuration de réglage, une rotation relative de l'une par rapport à l'autre autour de l'axe de rotation et, dans la configuration d'utilisation, leur immobilisation.

4. Machine selon la revendication 3, au moins une partie statorique comportant un carter (14) comportant une bride d'accouplement (22) solidaire du carter et la liaison mécanique (7) comportant au moins une lumière oblongue (20) réalisée dans la bride d'accouplement.

5. Machine selon la revendication 2, chaque partie statorique (2, 3) comportant un carter et la liaison mécanique (7) comportant une pièce d'accouplement (30) venant en recouvrement avec l'un des carters au moins.

6. Machine selon la revendication précédente, la pièce d'accouplement (30) comportant au moins une gorge annulaire (34) et le carter avec lequel la pièce d'accouplement vient en recouvrement portant au moins une vis (36) s'engageant dans cette gorge.

7. Machine selon l'une quelconque des revendications précédentes, comportant une chemise (45) tubulaire monobloc à l'intérieur de laquelle sont disposées les parties statoriques (2, 3).

8. Machine selon la revendication 3 et la revendication précédente, la reprise de couple entre les deux parties statoriques (2, 3) étant assurée par la liaison mécanique (7) et la chemise (45).

9. Machine selon l'une quelconque des revendications 3 à 7, la reprise de couple entre les parties statoriques (2, 3) étant entièrement assurée par la liaison mécanique (7).

10. Machine selon la revendication 3, la liaison mécanique (7) comportant un motoréducteur (48) permettant d'entraîner en rotation une partie statorique par rapport à l'autre.

11. Installation de réglage du décalage angulaire entre les axes magnétiques de deux parties rotoriques et/ou deux parties statoriques d'une machine électrique selon l'une quelconque des revendications précédentes, l'installation comportant :
- un dispositif d'alimentation en courant continu des phases des parties rotoriques et/ou des parties statoriques de la machine, et/ou
- un indicateur de synchronisation (50) relié aux phases des parties rotoriques et/ou statoriques.

12. Installation électrique comportant :
- une machine électrique (1) tournante selon l'une quelconque des revendications 1 à 22,
- un unique variateur de fréquence, relié aux parties statoriques et/ou rotoriques.

13. Procédé d'assemblage d'une machine électrique tournante polyphasée (1), comportant au moins deux parties rotoriques (4, 5) solidaires et rotatives autour d'un même axe de rotation et au moins deux parties statoriques (2, 3) solidaires, chaque partie statorique (2, 3) interagissant avec un partie rotorique (4, 5) respective,
les deux parties statoriques étant réunies par une liaison mécanique (7) permettant, dans une configuration de réglage de la machine, une rotation relative de l'une par rapport à l'autre autour de l'axe de rotation et, dans une configuration d'utilisation de la machine, leur immobilisation,
procédé dans lequel, dans la configuration de réglage :
- on positionne les parties rotoriques (4, 5) vis-à-vis des parties statoriques (2, 3),
- on aligne magnétiquement les parties statoriques (2, 3)
- en alimentant ces parties statoriques en courant continu de manière à générer un champ magnétique permettant une rotation relative des parties statoriques, et en alignant les axes magnétiques des phases correspondantes des parties statoriques, ou
- en mettant en rotation les rotors rigidement couplés de manière à induire des tensions dans les phases des parties statoriques et en comparant les tensions induites, notamment la phase des tensions induites, notamment au moyen d'un indicateur de synchronisation (50)
et
- on immobilise les parties statoriques (2, 3) alignées magnétiquement dans la configuration d'utilisation de la machine.

14. Procédé d'assemblage d'une machine électrique tournante polyphasée, comportant au moins deux parties rotoriques (4, 5) solidaires et rotatives autour d'un même axe de rotation et au moins deux parties statoriques (2, 3) solidaires, chaque partie statorique interagissant avec une partie rotorique respective,
les deux parties rotoriques étant réunies par une liaison mécanique permettant, dans une configuration de réglage de la machine, une rotation relative de l'une par rapport à l'autre autour de l'axe de rotation et, dans une configuration d'utilisation de la machine, leur immobilisation,
procédé dans lequel, dans la configuration de réglage,
- on aligne magnétiquement les parties rotoriques en les alimentant en courant continu de manière à générer un champ magnétique permettant une rotation relative des parties rotoriques pour aligner les axes magnétiques des phases correspondantes des parties rotoriques, et
- on immobilise les parties rotoriques alignées magnétiquement de manière à obtenir la configuration d'utilisation de la machine.

15. Utilisation d'une machine telle que définie à la revendication 10, dans laquelle on commande le motoréducteur (48) de façon à réduire le flux magnétique dans les bobines de l'une des parties statoriques, afin de défluxer la machine et d'augmenter la vitesse de rotation maximale.
